# EUROPÄISCHE PATENTSCHRIFT

(11) **EP 3 572 790 B1**
(45) Veröffentlichungstag und Bekanntmachung des Hinweises auf die Patenterteilung: **13.10.2021**
(21) Anmeldenummer: 19173058.9
(22) Anmeldetag: 07.05.2019
(51) Int. Cl.: G01N 21/84, G01N 21/01, G01N 21/27

(54) **VERFAHREN ZUM UNTERSUCHEN EINES PROBENMEDIUMS MITTELS EINER GERÜSTSTRUKTUR IN ZUSAMMENWIRKEN MIT EINER BILDAUSWERTEVORRICHTUNG UND EINEM EINE OPTOCHEMISCHE DETEKTIERFLÄCHE AUFWEISENDEN TRÄGER**
METHOD FOR EXAMINING A SAMPLE MEDIUM USING A SCAFFOLD STRUCTURE COOPERATING WITH AN IMAGE EVALUATION DEVICE AND A HOLDER COMPRISING AN OPTOCHEMICAL DETECTING SURFACE
MÉTHODE POUR L'EXAMEN D'UN SUPPORT D'ÉCHANTILLON EN UTILISANT UNE STRUCTURE DE SQUELETTE COOPÉRANT AVEC UN DISPOSITIF D'ÉVALUATION D'IMAGES ET UN SUPPORT COMPORTANT UNE SURFACE DE DÉTECTION OPTOCHIMIQUE

(30) Priorität: 23.05.2018 DE 102018208049
(43) Veröffentlichungstag der Anmeldung: 27.11.2019
(73) Patentinhaber: Robert Bosch GmbH, 70442 Stuttgart (DE)
(72) Erfinder: Martinez Prada, Maria, 71134 Aidlingen (DE); Gehrold, Andreas, 76228 Karlsruhe (DE)

(56) Entgegenhaltungen:
- WO-A1-2017/041129
- GB-A- 2 497 750
- US-A1- 2013 273 528
- US-A1- 2014 072 189
- KIM DAMI ET AL: "A portable colorimetric array reader for toxic gas detection", 2017 ISOCS/IEEE INTERNATIONAL SYMPOSIUM ON OLFACTION AND ELECTRONIC NOSE (ISOEN), IEEE, 28. Mai 2017 (2017-05-28), Seiten 1-3, XP033114250, DOI: 10.1109/ISOEN.2017.7968928 [gefunden am 2017-07-05]
- VLAD ONCESCU ET AL: "Smartphone based health accessory for colorimetric detection of biomarkers in sweat and saliva", LAB ON A CHIP, Bd. 13, Nr. 16, 7. Juni 2013 (2013-06-07), Seite 3232, XP055145187, ISSN: 1473-0197, DOI: 10.1039/c3lc50431j
- GIOVANNI RATENI ET AL: "Smartphone-Based Food Diagnostic Technologies: A Review", SENSORS, Bd. 17, Nr. 6, 20. Juni 2017 (2017-06-20), Seite 1453, XP055626736, DOI: 10.3390/s17061453
- DEVADHASAN JASMINE PRAMILA ET AL: "Smartphone coupled handheld array reader for real-time toxic gas detection", ANALYTICA CHIMICA ACTA, ELSEVIER, AMSTERDAM, NL, Bd. 984, 30. Juni 2017 (2017-06-30), Seiten 168-176, XP085173120, ISSN: 0003-2670, DOI: 10.1016/J.ACA.2017.06.036

## Beschreibung

Die Erfindung betrifft ein Verfahren zum Untersuchen eines Probenmediums mittels eines mindestens eine optochemische Detektierfläche aufweisenden Trägers.

### Stand der Technik

Aus dem Stand der Technik ist die Verwendung eines mindestens eine optochemische Detektierfläche aufweisenden Trägers zum Untersuchen einer Probe, wie beispielsweise einer Blutprobe, einer Urinprobe, einer Schweißprobe oder einer Speichelprobe, bekannt. Ebenso ist aus dem Stand der Technik die Verwendung eines Smartphones zum Auswerten der mindestens einen optochemische Detektierfläche des Trägers bekannt. Beispielsweise beschreibt die Veröffentlichung "Smartphone based health accessory for colorimetric detection of biomarkers in sweat and saliva" (V. Oncescu et al.; "Lab on a Chip"; 07 June 2013; 13; 3232-3238) eine Smartphone-Hülle mit einem daran ausgebildeten Schlitz, durch welchen ein als Träger verwendeter Teststreifen so in die Smartphone-Hülle einführbar sein soll, dass seine mindestens eine optochemische Detektierfläche mittels des Smartphones ausgewertet werden kann. Weitere Detektiervorrichtungen sind aus der US 2014/072189 A1 und der WO 2017/041129 A1 bekannt. Eine weitere Anordnung ist aus Dami et al., "A portable colorimetric array reader for toxic gas detection", 2017 ISCOS/IEEE International Symposium on Olfaction and Electronic Nose, 2017, Seiten 1-3 bekannt. Rateni et al., "Smartphone-based food diagnostic technologies: A review", Sensors, Bd. 17, Nr. 6, 2017, Seite 1453 betrifft weitere Sensoranordnungen.

Die Druckschrift US 2013/273528 A1 beschreibt ein Verfahren gemäß dem Oberbegriff des Anspruchs 1.

### Offenbarung der Erfindung

Die Erfindung schafft ein Verfahren zum Untersuchen eines Probenmediums mittels eines mindestens eine optochemische Detektierfläche aufweisenden Trägers mit den Merkmalen des Anspruchs 1. Bevorzugte Ausführungsformen sind Gegenstand der Unteransprüche

### Vorteile der Erfindung

Die vorliegende Erfindung schafft Möglichkeiten zur Sicherstellung von gleich bleibenden Rahmenbedingungen zur Auswertung der mindestens einen optochemischen Detektierfläche eines jeweils zum Untersuchen einer Probe eingesetzten Trägers. Die Sicherstellung der gleich bleibenden Rahmenbedingungen gewährleistet mindestens ein zuverlässiges und reproduzierbares Messergebnis bei der Auswertung. Ein weiterer Vorteil der vorliegenden Erfindung gegenüber dem Stand der Technik liegt darin, dass die jeweils genutzte Gerüststruktur kaum einem Beschmutzungsrisiko ausgesetzt ist (insbesondere verglichen mit einer herkömmlichen Smartphone-Hülle) und zusätzlich vergleichsweise einfach gereinigt werden kann. Die vorliegende Erfindung schafft somit auch Möglichkeiten zur Sicherstellung gleichbleibender Rahmenbedingungen für einen unkomplizierten (insbesondere mobilen) Einsatz.

Vorzugsweise ist die Gerüststruktur derart ausgebildet, dass, sofern der Träger in seiner Soll-Position angeordnet ist, die Gerüststruktur ein Innenvolumen mit dem darin vorliegenden Träger luft- und gasdurchlässig umspannt. Die vorliegende Erfindung kann somit auch für eine Gassensorik, d.h. für ein Untersuchen von gasförmigen Medien/Proben mittels des jeweils eingesetzten Trägers, genutzt werden.

In einer vorteilhaften Ausführungsform ist die Gerüststruktur derart auf der Bildauswertevorrichtung platzierbar, dass die zweite Wandkomponente der Gerüststruktur die Bildauswertevorrichtung kontaktiert und die Bildauswertevorrichtung in der Soll-Platzierposition bezüglich der Gerüststruktur angeordnet ist. Somit ist es nicht notwendig, die Gerüststruktur derart massiv auszubilden, dass die Bildauswertevorrichtung auf der Gerüststruktur ablegbar oder an die Gerüststruktur anlehnbar ist. Stattdessen kann auch eine vergleichsweise leichte (und damit auch gut luftdurchlässige) Gerüststruktur zum Zusammenwirken mit der Bildauswertevorrichtung eingesetzt werden, welche lediglich als "Träger-Tragestruktur" ausgebildet ist.

In einer weiteren vorteilhaften Ausführungsform der Gerüststruktur ist als die Bildauswertevorrichtung ein mit einer Kamera und/oder einem optischen Scanner bestücktes Mobilgerät in der Soll-Platzierposition bezüglich der Gerüststruktur anordbar. Das Mobilgerät kann insbesondere ein Smartphone oder ein Tablet sein. Die vorliegende Erfindung trägt somit zur Steigerung einer Multifunktionalität von bereits häufig genutzten Geräten bei.

Die vorausgehend beschriebenen Vorteile werden auch mittels einer entsprechenden Bildauswertevorrichtung zum Zusammenwirken mit der jeweiligen Gerüststruktur bewirkt, wobei die Bildauswertevorrichtung zum Ausführen eines Messprogramms programmiert ist, bei welchem zuerst mittels der bezüglich der Gerüststruktur in ihrer Soll-Platzierposition vorliegenden Bildauswertevorrichtung eine Kalibriermessung an der mindestens einen optochemischen Detektierfläche des in seiner Soll-Position angeordneten Trägers ausführbar ist, nach Ablauf einer vorgegebenen Wartezeit/Reaktionszeit nach der Kalibiermessung, mittels der bezüglich der Gerüststruktur in ihrer Soll-Platzierposition vorliegenden Bildauswertevorrichtung mindestens eine weitere Messung an der mindestens einen optochemischen Detektierfläche des in seiner Soll-Position angeordneten Trägers ausführbar ist, und die mindestens eine weitere Messung unter Berücksichtigung der zuvor ausgeführten Kalibriermessung auswertbar ist. Durch das zuvorige Ausführen der Kalibriermessung und die Berücksichtigung der zuvor ausgeführten Kalibriermessung beim Auswerten der mindestens einen Messung sind eine Genauigkeit und eine Zuverlässigkeit mindestens eines auf diese Weise erhaltenen Messergebnisses steigerbar. Auch in diesem Fall kann die Bildauswertevorrichtung ein mit einer Kamera und/oder einem optischen Scanner bestücktes Mobilgerät sein.

Auch ein Auswertesystem für zumindest einen mindestens eine optochemische Detektierfläche aufweisenden Träger mit einer derartigen Gerüststruktur und der damit zusammenwirkenden Bildauswertevorrichtung gewährleistet die vorausgehend beschriebenen Vorteile.

Das Ausführen eines Verfahrens gemäß Anspruch 1 zum Untersuchen eines Probenmediums mittels eines mindestens eine optochemische Detektierfläche aufweisenden Trägers schafft die oben beschriebenen Vorteile. Es wird ausdrücklich darauf hingewiesen, dass das Verfahren gemäß den vorausgehend beschriebenen Ausführungsformen der Gerüststruktur, der Bildauswertevorrichtung und/oder des Auswertesystems weiterbildbar ist.

### Kurze Beschreibung der Zeichnungen

Weitere Merkmale und Vorteile der vorliegenden Erfindung werden nachfolgend anhand der Figuren erläutert. Es zeigen:
Fig. 1 eine schematische Darstellung einer ersten in dem erfindungsgemäßen Verfahren einsetzbaren Gerüststruktur, bzw. des damit ausgebildeten Auswertesystems;
Fig. 2 eine schematische Darstellung einer zweiten in dem erfindungsgemäßen Verfahren einsetzbaren Gerüststruktur, bzw. des damit ausgebildeten Auswertesystems; und
Fig. 3a bis 3d ein Flussdiagramm und schematische Darstellungen eines mindestens eine optochemische Detektierfläche aufweisenden Trägers zum Erläutern einer Ausführungsform des Verfahrens zum Untersuchen eines Probenmediums mittels des Trägers.

### Ausführungsformen der Erfindung

Unter dem im Weiteren verwendeten Begriff "Träger" kann ein passiver Träger verstanden werden, welcher mindestens eine nachfolgend als "optochemische Detektierfläche " umschriebene Oberfläche aufweist. Die mindestens eine optochemische Detektierfläche ist jeweils derart mit mindestens einem Indikator- und/oder Nachweismaterial beschichtet, dass die optochemische Detektierfläche als Reaktion auf mindestens einen (spezifischen) chemischen Stoff und/oder als Reaktion auf eine an der (freiliegenden) optochemischen Detektierfläche vorliegenden physikalischen Größe ihre Absorptions- und/oder Emissionseigenschaften ändert. Die Änderung der Absorptions- und/oder Emissionseigenschaften der mindestens einen optochemischen Detektierfläche treten häufig im sichtbaren Spektrum auf und werden deshalb oft als ein Farbumschlag oder eine Farbänderung bezeichnet. Die Änderung der Absorptions- und/oder Emissionseigenschaften der mindestens einen optochemischen Detektierfläche können jedoch auch außerhalb des sichtbaren Spektrums auftreten.

Unter dem Träger kann beispielsweise ein Messstreifen, ein Indikatorstreifen, ein Mess-Stick, ein Indikator-Stick, ein Mess-Array oder ein Indikator-Array verstanden werden. Der Träger weist vorzugsweise eine bandförmige oder flächenförmige Trägerstruktur auf. Der Träger kann beispielsweise aus Papier, Pappe und/oder Plastik/Kunststoff sein.

Der mindestens eine chemische Stoff, mittels welchem die Änderung der Absorptions- und/oder Emissionseigenschaften der mindestens einen optochemischen Detektierfläche bewirkbar ist, kann beispielsweise auch ein Biomolekül, wie insbesondere ein DNA-Strang, ein RNA-Strang oder ein Protein, sein. Die mindestens eine physikalische Größe, welche ebenfalls die Änderung der Absorptions- und/oder Emissionseigenschaften der mindestens einen optochemischen Detektierfläche auslöst, kann z.B. eine Temperatur und/oder ein pH-Wert sein.

Als das mindestens eine Indikator- oder Nachweismaterial können nicht nur Farbindikatoren, sondern auch verschiedene andere chemische Stoffe, wie beispielsweise Metalloxide (z.B. Zinnoxid, Wolframoxid, Zinkoxid und/oder Aluminiumoxid) und/oder (mit Farbstoffen/"Nachweismolekülen" markierte und/oder unmarkierte) Biomoleküle, wie insbesondere (markierte und/oder unmarkierte) Antikörper, (markierte und/oder unmarkierte) DNA-Stränge und/oder (markierte und/oder unmarkierte) RNA-Stränge eingesetzt sein. Es wird ausdrücklich darauf hingewiesen, dass beispielsweise auch alle bekannten Materialien von ELISA-Prozessen (Enzyme-linked Immunosorbent Assay) auf der mindestens einen optochemischen Detektierfläche abgeschieden sein können.

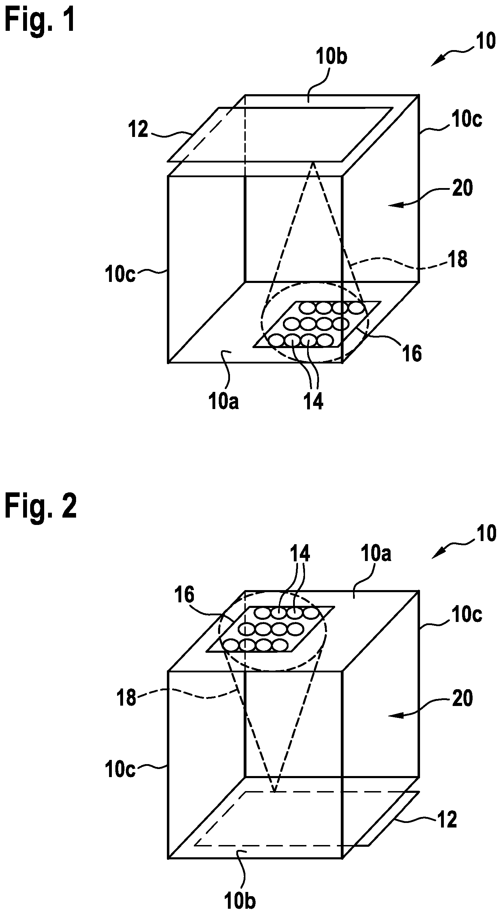

Fig. 1 zeigt eine schematische Darstellung einer ersten in dem erfindungsgemäßen Verfahren einsetzbaren Gerüststruktur, bzw. des damit ausgebildeten Auswertesystems.

Die in Fig. 1 schematisch dargestellte Gerüststruktur 10 ist zum Zusammenwirken mit einer Bildauswertevorrichtung 12 für zumindest einen mindestens eine optochemische Detektierfläche 14 aufweisenden Träger 16 ausgebildet. Die Gerüststruktur 10 kann auch als eine Halterung 10 bezeichnet werden. Die Gerüststruktur 10 und die damit zusammenwirkende Bildauswertevorrichtung 12 bilden ein Auswertesystem für zumindest den Träger 16.

Die Gerüststruktur 10 weist eine erste Wandkomponente 10a auf, an welcher eine (nicht skizzierte) erste Markierung zumindest eine Sollposition des Trägers 16 anzeigt. Die Soll-Position des Trägers 16 kann z.B. ein Soll-Einlegebereich, ein Soll-Auflegebereich, ein Soll-Anlehnbereich oder ein Soll-Unterlegbereich des Trägers 16 sein. Die erste Markierung kann beispielsweise eine Farbmarkierung, eine an der erste Wandkomponente 10a hervorstehende Umrandung oder Teilumrandung der Soll-Position und/oder eine in der ersten Wandkomponente 10a ausgebildete Vertiefung umfassen.

Die Gerüststruktur 10 hat auch eine zweite Wandkomponente 10b, an welcher eine (nicht dargestellte) zweite Markierung eine Soll-Platzierposition der Bildauswertevorrichtung 12 bezüglich der Gerüststruktur 10 anzeigt. Die Soll-Platzierposition der Bildauswertevorrichtung 12 bezüglich der Gerüststruktur 10 kann z.B. ein Soll-Einlegebereich, ein Soll-Auflegebereich, ein Soll-Anlehnbereich oder ein Soll-Unterlegbereich der Gerüststruktur 10 sein. Die Soll-Platzierposition der Bildauswertevorrichtung 12 wird von der zweiten Markierung an der zweiten Wandkomponente 10b derart angezeigt, dass, sofern der Träger 16 in seiner Soll-Position angeordnet ist und die Bildauswertevorrichtung 12 bezüglich der Gerüststruktur 10 in ihrer Soll-Platzierposition vorliegt, die mindestens eine optochemische Detektierfläche 14 des Trägers 16 in einem Sichtfeld 18 (z.B. einer Lichteinfallsoptik) der Bildauswertevorrichtung 12 und in einem durch die Gerüststruktur 10 fest vorgegebenen Abstand zu der Bildauswertevorrichtung 12 angeordnet ist. (Unter dem Sichtfeld 18 der Lichteinfallsoptik/der Bildauswertevorrichtung 12 kann auch ein Lichtkegel einer Beleuchtungseinrichtung der Bildauswertevorrichtung 12, insbesondere bei Blitzauslösung, verstanden werden.) Auch die zweite Markierung an der zweiten Wandkomponente 10b der Gerüststruktur 10 kann eine Farbmarkierung, eine an der zweiten Wandkomponente 10b hervorstehende Umrandung oder Teilumrandung und/oder eine in der zweiten Wandkomponente 10b ausgebildete Vertiefung sein. Zusätzlich kann als die zweite Markierung auch ein durch die zweite Wandkomponente 10b gebildetes Fenster an der Gerüststruktur 10 ausgebildet sein, an welchem die Bildauswertevorrichtung 12 derart anordbar ist, dass das Sichtfeld 18 der Lichteinfallsoptik/der Bildauswertevorrichtung 12 durch das Fenster in ein von der Gerüststruktur 10 umspanntes Innenvolumen 20 verläuft.

Die Gerüststruktur 10 erlaubt somit ein Einhalten von vorgegebenen Rahmenbedingungen beim Auswerten der mindestens einen optochemischen Detektierfläche 14 des Trägers 16 mittels der Bildauswertevorrichtung 12 auf einfache Weise. Sie stellt damit sicher, dass das mindestens eine mittels der Auswertung erhaltene Messergebnis zuverlässig und reproduzierbar ist. Ein weiterer Vorteil der Gerüststruktur 10 liegt darin, dass bei ihrer Verwendung nur ein relativ geringes Beschmutzungsrisiko der Gerüststruktur 10, z.B. durch ein Benetzen/Beschichten der Gerüststruktur 10 mit einem mittels des Trägers 16 untersuchten Probenmedium vorliegt. Außerdem lässt sich die Gerüststruktur 10 vergleichsweise einfach reinigen, z.B. durch ein "Abwischen" der Gerüststruktur 10 mit einem (feuchten) Lappen.

Die Gerüststruktur 10 kann aus mindestens einem vergleichsweise leichten Material, wie beispielsweise Pappe, Karton und/oder Plastik/Kunststoff, gebildet sein. Eine Voraussetzung für das mindestens eine Material der Gerüststruktur 10 ist lediglich, dass die Gerüststruktur 10 während ihres Zusammenwirkens mit der Bildauswertevorrichtung 12 zum Auswerten des Trägers 16 formstabil und distanzstabil vorliegt. Die Gerüststruktur 10 kann beispielsweise auch vor dem Anordnen der Bildauswertevorrichtung 12 und des Trägers 16 (teleskopartig) auseinanderfaltbar sein, bzw. nach dem Entfernen der Bildauswertevorrichtung 12 und des Trägers 16 wieder (teleskopartig) zusammenfaltbar sein. Als Alternative dazu ist in der Ausführungsform der Fig. 1 die Gerüststruktur 10 aus der ersten Wandkomponente 10a, der zweiten Wandkomponente 10b und mindestens drei Abstandsstäben 10c derart reversibel zusammensteckbar/zusammengesteckt, dass, sofern der Träger 16 in seiner Soll-Position angeordnet ist und die Bildauswertevorrichtung 12 bezüglich der zusammengesteckten Gerüststruktur 10 in ihrer Soll-Platzierposition vorliegt, der vorgegebene Abstand zwischen der mindestens einen optochemischen Detektierfläche 14 des Trägers 16 und der Lichteinfallsoptik/der Bildauswertevorrichtung 12 mittels der Abstandsstäbe 10c eingehalten ist. Nach einem Entfernen der Bildauswertevorrichtung 12 und des Trägers 16 kann die Gerüststruktur 10 wieder in ihre Einzelteile 10a bis 10c auseinandergebaut werden.

Vorzugsweise ist die Gerüststruktur 10 derart ausgebildet, dass, sofern der Träger 16 in seiner Soll-Position angeordnet ist, die Gerüststruktur 10 das Innenvolumen 20 mit dem darin vorliegenden Träger 16 luft- und gasdurchlässig umspannt. Somit kann ein Luft- oder Gasaustausch zwischen dem Innenvolumen 20 und einer Umgebung der Gerüststruktur 10 stattfinden. Aufgrund der Luft- und Gasdurchlässigkeit der Gerüststruktur 10 kann beispielsweise auch eine in der Umgebung vorliegende Gasprobe als Probemedium mittels der mindestens einen optochemischen Detektierfläche 14 des Trägers 16 auf mindestens eine chemische und/oder physikalische Eigenschaft untersucht werden. Die vorteilhafte Luft- und Gasdurchlässigkeit der Gerüststruktur 10 ist beispielsweise durch die Verwendung der mindestens drei Abstandsstäbe 10c gewährleistet, zwischen welchen die Gerüststruktur 10 "offene Seitenwände" aufweist. Alternativ kann die Gerüststruktur 10 jedoch auch mit mindestens einer Luft- und Gasaustauschöffnung, bzw. mit mindestens einem Luft- und Gasaustauschfenster, ausgebildet sein. Die Gerüststruktur 10 kann ebenso zumindest teilweise porös ausgebildet sein.

Fig. 2 zeigt eine schematische Darstellung einer zweiten in dem erfindungsgemäßen Verfahren einsetzbaren Gerüststruktur, bzw. des damit ausgebildeten Auswertesystems.

Die in Fig. 2 schematisch dargestellte Gerüststruktur 10 unterscheidet sich von der zuvor beschriebenen Ausführungsform darin, dass die Gerüststruktur 10 auf der Bildauswertevorrichtung 12 derart platzierbar ist, dass die zweite Wandkomponente 10b der Gerüststruktur 10 die Bildauswertevorrichtung 12 kontaktiert und die Bildauswertevorrichtung 12 in der Soll-Platzierposition bezüglich der Gerüststruktur 10 angeordnet ist. Die Gerüststruktur 10 muss somit lediglich als "Trägerstruktur für den Träger 16" eine ausreichende Formstabilität und Distanzstabilität aufweisen, braucht aber keine Anforderungen einer "Trägerstruktur für die Bildauswertevorrichtung 12" erfüllen. Die Gerüststruktur 10 kann deshalb vergleichsweise leicht (z.B. aus Pappe, Karton und/oder Plastik/Kunststoff) und kleinvolumig ausgebildet sein. Dies erleichtert einen Transport der Gerüststruktur 10, insbesondere für eine mobile Anwendung der Gerüststruktur 10.

Bezüglich weiterer Merkmale der Gerüststruktur 10 der Fig. 2 wird auf die zuvor beschriebene Ausführungsform verwiesen.

Die mit den oben beschriebenen Gerüststrukturen 10 jeweils zusammenwirkende Bildauswertevorrichtung 12 kann beispielsweise ein mit einer Kamera und/oder einem optischen Scanner (einem optischen Flächen- und/oder Volumenabtaster) bestücktes Mobilgerät 12 (mit einem abgespeicherten Auswerteprogramm für zumindest den die mindestens eine optochemische Detektierfläche 14 aufweisenden Träger 16) sein. Insbesondere kann die Bildauswertevorrichtung 12 ein Smartphone oder ein Tablet sein. Die hier aufgezählten Mobilgeräte 12 sind jedoch nur beispielhaft zu interpretieren. Anstelle eines Mobilgeräts 12 kann die Bildauswertevorrichtung 12 ebenso auch eine fest-verbaute Vorrichtung 12 mit einer Kamera und/oder einem optischen Scanner (einem optischen Flächen- und/oder Volumenabtaster), beispielsweise eine in einem Fahrzeug montierte Vorrichtung 12 mit einer Kamera und/oder einem optischen Scanner, sein. Vorzugsweise ist die Bildauswertevorrichtung 12 auch zum Ausführen eines Messprogramms programmiert, bei welchem zuerst mittels der bezüglich der Gerüststruktur 10 in ihrer Soll-Platzierposition vorliegenden Bildauswertevorrichtung 12 eine Kalibriermessung an der mindestens einen optochemischen Detektierfläche 14 des in seiner Soll-Position angeordneten Trägers 16 ausführbar ist/ausgeführt wird. Erfindungsgemäß wird die Kalibriermessung ausgeführt, bevor die mindestens eine optochemische Detektierfläche 14 mit einem Probenmedium benetzt oder dem Probenmedium ausgesetzt ist, nämlich noch während eine Schutzfolie 22 die mindestens eine optochemische Detektierfläche 14 des Trägers 12 abdeckt. Außerdem gibt das programmierte Messprogramm der Bildauswertevorrichtung 12 vor, dass nach Ablauf einer vorgegebenen Wartezeit/Reaktionszeit nach der Kalibiermessung mittels der bezüglich der Gerüststruktur 10 in ihrer Soll-Platzierposition vorliegenden Bildauswertevorrichtung 12 mindestens eine weitere Messung an der mindestens einen optochemischen Detektierfläche 14 des in seiner Soll-Position angeordneten Trägers 16 ausgeführt wird, und die mindestens eine weitere Messung unter Berücksichtigung der zuvor ausgeführten Kalibriermessung ausgewertet wird.

Die Wartezeit/Reaktionszeit kann mittels einer Zeitzähleinrichtung der Bildauswertevorrichtung 12 eingehalten werden. Zumindest zeitweise während der vorgegebenen Wartezeit/Reaktionszeit wird die mindestens eine (von der Schutzfolie 22 freigelegte) optochemische Detektierfläche 14 mit dem Probenmedium benetzt oder dem Probenmedium ausgesetzt. Das zuvorige Ausführen der Kalibiermessung und die Berücksichtigung der zuvor ausgeführten Kalibriermessung beim Auswerten der mindestens einen weiteren Messung verbessert eine Genauigkeit und eine Zuverlässigkeit mindestens eines durch die mindestens eine weitere Messung gewonnenen Messergebnisses. Insbesondere kann anhand eines Vergleichs der Kalibriermessung mit der mindestens einen weiteren Messung eine Änderung der Absorptions- und/oder Emissionseigenschaften der mindestens einen optochemischen Detektierfläche 14 verlässlicher festgestellt werden, wodurch genauere und zuverlässigere Rückschlüsse auf die mindestens eine chemische und/oder physikalische Eigenschaft des Probemediums möglich sind.

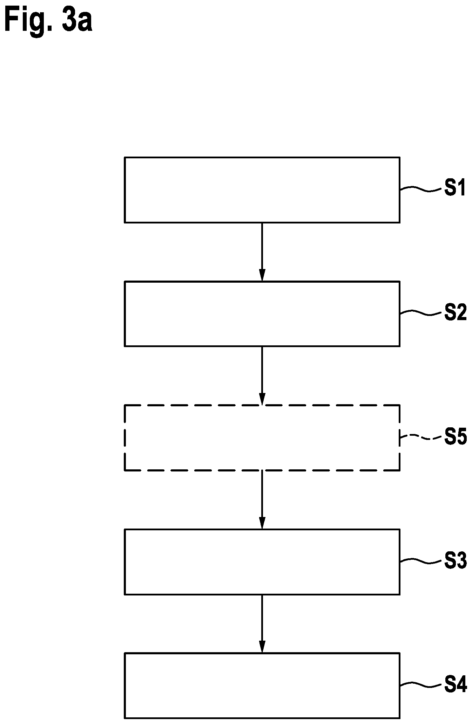

Fig. 3a bis 3d zeigen ein Flussdiagramm und schematische Darstellungen eines mindestens eine optochemische Detektierfläche aufweisenden Trägers zum Erläutern einer Ausführungsform des erfindungsgemäßen Verfahrens zum Untersuchen eines Probenmediums mittels des Trägers.

In einem Verfahrensschritt S1 wird der Träger 16 in einer mittels einer ersten Markierung an einer ersten Wandkomponente 10a einer Gerüststruktur 10 angezeigten Soll-Position angeordnet. Als Gerüststruktur 10 können alle zuvor beschriebenen Ausführungsformen eingesetzt werden.

In einem Verfahrensschritt S2 wird eine Bildauswertevorrichtung 12 bezüglich der Gerüststruktur 10 in einer mittels einer zweiten Markierung an einer zweiten Wandkomponente 10b der Gerüststruktur 10 angezeigten Soll-Platzierposition positioniert. Als Bildauswertevorrichtung 12 können alle oben schon beschriebenen Beispiele eingesetzt werden. Der Verfahrensschritt S2 kann vor oder nach dem Verfahrensschritt S1 ausgeführt werden. Mittels des Ausführens der Verfahrensschritte S1 und S2 wird die mindestens eine optochemische Detektierfläche 14 des Trägers 16 in einem Sichtfeld 18 (z.B. einer Lichteinfallsoptik) der Bildauswertevorrichtung 12 und in einem durch die Gerüststruktur 10 fest vorgegebenen Abstand zu der Bildauswertevorrichtung 12 angeordnet. Damit gewährleistet auch das hier beschriebene Verfahren die oben schon erläuterten Vorteile.

Nach dem Anordnen des Trägers 16 in seiner Soll-Position wird seine mindestens eine optochemische Detektierfläche 14 mit dem Probenmedium benetzt oder dem Probenmedium ausgesetzt. Dies geschieht in einem Verfahrensschritt S3, welcher nach den Verfahrensschritten S1 und S2 (d.h. nach dem Anordnen des Trägers 16 in seiner Soll-Position und dem Positionieren der Bildauswertevorrichtung 12 bezüglich der Gerüststruktur 10 in ihrer Soll-Platzierposition) ausgeführt wird. In einem Verfahrensschritt S4, welcher nach den Verfahrensschritten S1 bis S3 ausgeführt wird, wird mittels der bezüglich der Gerüststruktur 10 in ihrer Soll-Platzierposition vorliegenden Bildauswertevorrichtung 12 mindestens eine Messung an der mindestens einen optochemischen Detektierfläche 14 des in seiner Soll-Position angeordneten Trägers 16 ausgeführt und mittels der Bildauswertevorrichtung 12 ausgewertet. Bei der Auswertung der mindestens einen Messung werden vorzugsweise mindestens ein chemischer Stoff in dem Probenmedium nachgewiesen, auf seine Konzentration in dem Probenmedium untersucht und/oder mindestens eine in dem Probenmedium vorherrschende physikalische Größe bestimmt. Das Ausführen der mindestens einen Messung geschieht beispielsweise durch Aufnehmen mindestens eines Fotos mittels einer Kamera der Bildauswertevorrichtung 12. Anschließend kann als Auswertung der mindestens einen Messung eine Farbauswertung mindestens einer der mindestens einen optochemischen Detektierfläche 14 entsprechenden Teilfläche des Fotos durch ein auf der Bildauswertevorrichtung 12 abgespeichertes Auswerteprogramm ausgeführt werden. Wahlweise kann vor jeder Messung mittels einer entsprechenden Sensorik der Bildauswertevorrichtung 12 ein Lichtverhältnis in dem Sichtfeld 18 der Bildauswertevorrichtung 12 daraufhin untersucht werden, ob zum Ausführen der Messung/Aufnehmen eines Fotos ein Auslösen eines Blitzes vorteilhaft ist.

Das mittels der Fig. 3a bis 3d schematisch wiedergegebene Verfahren ist erfindungsgemäß dahingehend erweitert, dass nach den Verfahrensschritten S1 und S2 und vor dem Verfahrensschritt S3 als Verfahrensschritt S5 mittels der bezüglich der Gerüststruktur 10 in ihrer Soll-Platzierposition vorliegenden Bildauswertevorrichtung 12 eine Kalibriermessung an der mindestens einen optochemischen Detektierfläche 14 des in seiner Soll-Position angeordneten Trägers 16 ausgeführt wird. Der Träger 16 wird außerdem in dem Verfahrensschritt S1 mit einer seine mindestens eine optochemische Detektierfläche 14 abdeckenden Schutzfolie 22 in seiner Soll-Position an der Gerüststruktur 10 angeordnet. (Unter der Schutzfolie 22 ist vorzugsweise eine flüssigkeitsundurchlässige und/oder gasundurchlässige Abziehfolie zu verstehen.)

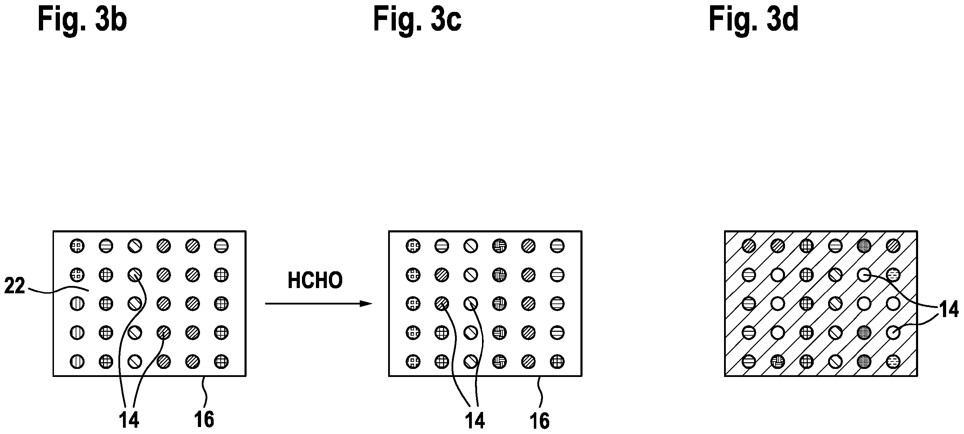

Nachfolgend wird ein Beispiel zum vorteilhaften Detektieren von Formaldehyd (d.h. zum Nachweisen von Formaldehyd oder zur Messung einer Formaldehyd-Konzentration) beschrieben: Zuerst werden die Verfahrensschritte S1, S1 und S5 ausgeführt. Fig. 3b zeigt ein als Kalibriermessung aufgenommenes erstes Foto des die Schutzfolie 22 tragenden Trägers 16. Nach dem Verfahrensschritt S5 (d.h. nach der Kalibriermessung) wird die Schutzfolie 22 von der mindestens einen optochemischen Detektierfläche 14 des Trägers 16 entfernt. Anschließend wird der Verfahrensschritt S3 ausgeführt, während welchem die mindestens eine freigelegte optochemische Detektierfläche 14 einem Probengas als dem Probenmedium ausgesetzt wird. Optionaler Weise wird in dem Verfahrensschritt S3 auch eine Zeitzähleinrichtung der Bildauswertevorrichtung 12 gestartet, um eine fest vorgegebene Wartezeit/Reaktionszeit verlässlich einzuhalten.

Nach der fest vorgegebenen Wartezeit/Reaktionszeit wird als Verfahrensschritt S4 ein zweites Foto von der Bildauswertevorrichtung 12 gemacht, welches in Fig. 3c gezeigt ist.

Danach wird das zweite Foto mittels der Bildauswertevorrichtung 12 unter Berücksichtigung des zuvor als Kalibriermessung aufgenommenen ersten Fotos ausgewertet. Beispielhaft wird dabei ein in Fig. 3d dargestelltes Farbdifferenzfoto erstellt, welches eine Farbänderung/einen Farbumschlag zwischen dem ersten Foto und dem zweiten Foto wiedergibt, der aufgrund des als Analyt eingesetzten Formaldehyd an den optochemischen Detektierflächen 14 feststellbar ist. Anschließend kann anhand des Farbdifferenzfotos eine Formaldehyd-Konzentration des Probengases festgelegt werden.

## Patentansprüche

1. Verfahren zum Untersuchen eines Probenmediums mittels eines mindestens eine optochemische Detektierfläche (14) aufweisenden Trägers (16) mit den Schritten:
Anordnen des Trägers (16) in einer mittels einer ersten Markierung an einer ersten Wandkomponente (10a) einer Gerüststruktur (10) angezeigten Soll-Position (S1);
Positionieren einer Bildauswertevorrichtung (12) bezüglich der Gerüststruktur (10) in einer mittels einer zweiten Markierung an einer zweiten Wandkomponente (10b) der Gerüststruktur (10) angezeigten Soll-Platzierposition (S2), wodurch die mindestens eine optochemische Detektierfläche (14) des Trägers (16) in einem Sichtfeld (18) der Bildauswertevorrichtung (12) und in einem durch die Gerüststruktur (10) fest vorgegebenen Abstand zu der Bildauswertevorrichtung (12) angeordnet wird, wobei nach dem Anordnen des Trägers (16) in seiner Soll-Position und dem Positionieren der Bildauswertevorrichtung (12) bezüglich der Gerüststruktur (10) in ihrer Soll-Platzierposition die mindestens eine optochemische Detektierfläche (14) des Trägers (16) mit dem Probenmedium benetzt oder dem Probenmedium ausgesetzt wird (S3); und
Ausführen mindestens einer Messung mittels der bezüglich der Gerüststruktur (10) in ihrer Soll-Platzierposition vorliegenden Bildauswertevorrichtung (12) an der mindestens einen optochemischen Detektierfläche (14) des in seiner Soll-Position angeordneten Trägers (16) und Auswerten der mindestens einen Messung mittels der Bildauswertevorrichtung (12) (S4),
wobei der Träger (16) mit einer seine mindestens eine optochemische Detektierfläche (14) abdeckenden Schutzfolie (22) in der Soll-Position angeordnet wird,
**dadurch gekennzeichnet,**
**dass** nach dem Anordnen des die Schutzfolie (22) tragenden Trägers (16) in seiner Soll-Position eine Kalibriermessung mittels der bezüglich der Gerüststruktur (10) in ihrer Soll-Platzierposition vorliegenden Bildauswertevorrichtung (12) an der mindestens einen optochemischen Detektierfläche (14) des in seiner Soll-Position angeordneten Trägers (16) ausgeführt wird (S5), nach der Kalibriermessung die Schutzfolie (22) von der mindestens einen optochemischen Detektierfläche (14) des Trägers (16) entfernt wird und die mindestens eine freigelegte optochemische Detektierfläche (14) mit dem Probenmedium benetzt oder dem Probenmedium ausgesetzt wird, und wobei das Auswerten der mindestens einen Messung mittels der Bildauswertevorrichtung (12) unter Berücksichtigung der zuvor ausgeführten Kalibriermessung erfolgt.

2. Verfahren nach Anspruch 1, wobei die mindestens eine freigelegte optochemische Detektierfläche (14) einem Probengas als dem Probenmedium ausgesetzt wird.

3. Verfahren nach Anspruch 1 oder 2, wobei die Gerüststruktur (10) derart ausgebildet ist, dass, sofern der Träger (16) in seiner Soll-Position angeordnet ist, die Gerüststruktur (10) ein Innenvolumen (20) mit dem darin vorliegenden Träger (16) luft- und gasdurchlässig umspannt.

4. Verfahren nach einem der Ansprüche 1 bis 3, wobei die Gerüststruktur (10) derart auf der Bildauswertevorrichtung (12) platzierbar ist, dass die zweite Wandkomponente (10b) der Gerüststruktur (10) die Bildauswertevorrichtung (12) kontaktiert und die Bildauswertevorrichtung (12) in der Soll-Platzierposition bezüglich der Gerüststruktur (10) angeordnet ist.

5. Verfahren nach einem der Ansprüche 1 bis 4, wobei die Bildauswertevorrichtung (12) ein mit einer Kamera und/oder einem optischen Scanner bestücktes Mobilgerät (12) ist.

## Claims

1. Method for analysing a sample medium by means of a support (16) comprising at least one optochemical detection surface (14), comprising the steps of:
arranging the support (16) in a target position indicated by means of a first marking on a first wall component (10a) of a scaffold structure (10) (S1);
positioning an image evaluation device (12) with regard to the scaffold structure (10) in a target placement position indicated by means of a second marking on a second wall component (10b) of the scaffold structure (10) (S2), the result being that the at least one optochemical detection surface (14) of the support (16) is arranged in a field of view (18) of the image evaluation device (12) and at a distance from the image evaluation device (12) that is fixedly predetermined by the scaffold structure (10), wherein, after the arrangement of the support (16) in its target position and after the positioning of the image evaluation device (12) with regard to the scaffold structure (10) in its target placement position, the at least one optochemical detection surface (14) of the support (16) is wetted with the sample medium or exposed to the sample medium (S3); and
carrying out at least one measurement, by means of the image evaluation device (12) present with regard to the scaffold structure (10) in its target placement position, on the at least one optochemical detection surface (14) of the support (16) arranged in its target position and evaluating the at least one measurement by means of the image evaluation device (12) (S4),
wherein the support (16) is arranged in the target position with a protective film (22) covering its at least one optochemical detection surface (14),
**characterized in**
**that**, after the arrangement of the support (16) bearing the protective film (22) in its target position, a calibration measurement is carried out, by means of the image evaluation device (12) present with regard to the scaffold structure (10) in its target placement position, on the at least one optochemical detection surface (14) of the support (16) arranged in its target position (S5), the protective film (22) is removed from the at least one optochemical detection surface (14) of the support (16) after the calibration measurement and the at least one exposed optochemical detection surface (14) is wetted with the sample medium or exposed to the sample medium, and wherein the evaluation of the at least one measurement by means of the image evaluation device (12) is effected taking into account the calibration measurement previously carried out.

2. Method according to Claim 1, wherein the at least one exposed optochemical detection surface (14) is exposed to a sample gas as the sample medium.

3. Method according to Claim 1 or 2, wherein the scaffold structure (10) is designed such that, if the support (16) is arranged in its target position, the scaffold structure (10) encompasses an inner volume (20) with the support (16) present therein in an air- and gas-permeable manner.

4. Method according to any of Claims 1 to 3, wherein the scaffold structure (10) is placeable on the image evaluation device (12) such that the second wall component (10b) of the scaffold structure (10) contacts the image evaluation device (12) and the image evaluation device (12) is arranged with regard to the scaffold structure (10) in the target placement position.

5. Method according to any of Claims 1 to 4, wherein the image evaluation device (12) is a mobile device (12) equipped with a camera and/or an optical scanner.

## Revendications

1. Procédé d'examen d'un milieu échantillon au moyen d'un support (16) comportant au moins une surface de détection optochimique (14), ledit procédé comprenant les étapes suivantes :
disposer le support (16) dans une position cible (S1) indiquée au moyen d'un premier repère sur un premier composant de paroi (10a) d'une structure d'armature (10) ;
positionner un dispositif d'évaluation d'image (12) par rapport à la structure d'armature (10) dans une position de placement cible (S2) indiquée au moyen d'un deuxième repère sur un deuxième composant de paroi (10b) de la structure d'armature (10), ce qui permet de disposer l'au moins une surface de détection optochimique (14) du support (16) dans une zone d'observation (18) du dispositif d'évaluation d'images (12) et à une distance du dispositif d'évaluation d'images (12) qui est spécifiée de manière fixe par la structure d'armature (10), après avoir disposé le support (16) dans sa position cible et positionner le dispositif d'évaluation d'image (12) par rapport à la structure d'armature (10) dans sa position de placement cible, l'au moins une surface de détection optochimique (14) du support (16) étant humidifiée avec le milieu échantillon ou exposée au milieu échantillon (S3) ; et
effectuer au moins une mesure au moyen du dispositif d'évaluation d'image (12) présent dans sa position de placement cible par rapport à la structure d'armature (10) sur l'au moins une surface de détection optochimique (14) du support (16) disposé dans sa position cible et évaluer l'au moins une mesure au moyen du dispositif d'évaluation d'image (12) (S4),
le support (16) pourvu d'un film protecteur (22) recouvrant sa au moins une surface de détection optochimique (14) étant disposé dans la position cible,
**caractérisé en ce que**
après avoir disposé le support (16), portant le film protecteur (22), dans sa position cible, une mesure d'étalonnage est effectuée (S5) au moyen du dispositif d'évaluation d'image (12), présent à sa position de placement cible par rapport à la structure d'armature (10), sur l'au moins une surface de détection optochimique (14) du support (16) disposé à sa position cible, le film protecteur (22) est retiré de l'au moins une surface de détection optochimique (14) du support (16) après la mesure d'étalonnage et l'au moins une surface de détection optochimique exposée (14) est humidifiée avec le milieu échantillon ou exposée au milieu échantillon, et l'évaluation de l'au moins une mesure étant effectuée au moyen du dispositif d'évaluation d'image (12) avec prise en compte de la mesure d'étalonnage effectuée précédemment.

2. Procédé selon la revendication 1, l'au moins une surface de détection optochimique exposée (14) étant soumise à un gaz échantillon en tant que milieu échantillon.

3. Procédé selon la revendication 1 ou 2, la structure d'armature (10) étant conçue de telle sorte que, si le support (16) est disposé dans sa position cible, la structure d'armature (10) transforme un volume interne (20), à l'intérieur duquel le support (16) est présent, de manière à ce qu'il soit perméable à l'air et au gaz.

4. Procédé selon l'une des revendications 1 à 3, la structure d'armature (10) pouvant être placée sur le dispositif d'évaluation d'image (12) de telle sorte que le deuxième composant de paroi (10b) de la structure d'armature (10) vienne en contact avec le dispositif d'évaluation d'image (12) et que le dispositif d'évaluation d'image (12) soit disposé dans la position de placement cible par rapport à la structure d'armature (10).

5. Procédé selon l'une des revendications 1 à 4, le dispositif d'évaluation d'image (12) étant un appareil mobile (12) équipé d'une caméra et/ou d'un scanner optique.
